(19) Europäisches Patentamt
European Patent Office
Office européen des brevets

(11) Veröffentlichungsnummer: **0 591 762 A1**

(12) # EUROPÄISCHE PATENTANMELDUNG

(21) Anmeldenummer: **93115259.9**

(22) Anmeldetag: **22.09.93**

(51) Int. Cl.5: **C08G 64/24**, C08G 64/28, C08G 63/82, C08G 63/64

(30) Priorität: **05.10.92 DE 4233345**

(43) Veröffentlichungstag der Anmeldung: **13.04.94 Patentblatt 94/15**

(84) Benannte Vertragsstaaten: **BE DE ES IT NL**

(71) Anmelder: **BAYER AG**

**D-51368 Leverkusen(DE)**

(72) Erfinder: **Pakull, Ralf, Dr.**
**Am Braunsacker 80**
**D-50765 Köln(DE)**
Erfinder: **Fennhoff, Gerhard, Dr.**
**Buschstrasse 25**
**D-47877 Willich(DE)**
Erfinder: **Strüver, Werner, Dr.**
**Hans-Sachs-Strasse 4**
**D-51375 Leverkusen(DE)**
Erfinder: **Kirsch, Jürgen, Dr.**
**Völklinger Strasse 20**
**D-51375 Leverkusen(DE)**

(54) **Verfahren zur Herstellung von Polycarbonaten und von Polyestercarbonaten.**

(57) Gegenstand der vorliegenden Erfindung ist die Herstellung von thermoplastischen Polycarbonaten und von thermoplastischen Polyestercarbonaten, Copolycarbonaten und/oder Copolyestercarbonaten nach den Methoden des Phasengrenzflächenverfahrens oder des Verfahrens in homogener Lösung unter Verwendung von Harzen mit katalytisch aktiven Gruppen als Katalysatoren.

EP 0 591 762 A1

Gegenstand der vorliegenden Erfindung ist ein Verfahren zur Herstellung von thermoplatischen Polycarbonaten und von thermoplastischen Polyestercarbonaten aus Diphenolen, Carbonatspendern, gegebenenfalls aromatischen und/oder aliphatischen Dicarbonsäuren bzw. Dicarbonsäuredichloriden und/oder aromatischen und/oder aliphatischen Hydroxicarbonsäuren bzw. Hydroxicarbonsäurechloriden und/oder Kettenabbrechern und gegebenenfalls Verzweigern nach den Methoden des Phasengrenzflächenverfahrens oder des Verfahrens in homogener Lösung unter Verwendung von Katalysatoren, das dadurch gekennzeichnet ist, daß man als Katalysatoren Harze mit katalytisch aktiven Gruppen verwendet.

Die Begriffe Polycarbonat und Polyestercarbonat schließen auch die Copolymeren Copolycarbonat und Copolyestercarbonat ein.

Die vorstehend verkürzte Schreibweise betrifft also die folgenden 6 Umsetzungsvarianten:

1. Diphenole + Carbonatspender,
2. Diphenole + Carbonatspender + Dicarbonsäuredichloride
3. Dihenole + Carbonatspender + Kettenabbrecher
4. Diphenole + Carbonatspender + Dicarbonsäuredichloride + Kettenabbrecher
5. Diphenole + Carbonatspender + Kettenabbrecher + Verzweiger
6. Diphenol + Carbonatspender + Dicarbonsäuredichloride + Kettenabbrecher + Verzweiger

Anstelle der Dicarbonsäuredichloride können in bestimmten Verfahrensvarianten auch die Dicarbonsäuren oder deren Anhydride eingesetzt werden.

Gegebenenfalls können auch Hydroxicarbonsäuren bzw. Hydroxicarbonsäurechloride zusätzlich zu den Dicarbonsäuredichloriden oder anstelle der Dicarbonsäuredichloride eingesetzt werden.

Die Herstellung von Polycarbonaten und Polyestercarbonaten und nach dem Zweiphasengrenzflächenverfahren unter Verwendung von Katalysatoren ist bekannt und zum Beispiel beschrieben in US 3 220 975, JP 11447/1972 und EP 753. Diese Verfahren setzen den Katalysator nach der Phosgenierung einer Alkoholat- und/oder Bisphenolatlösung dem Reaktionsgemisch zu, daher müssen diese Katalysatoren nach der Reaktion aus der erhaltenen Polycarbonatlösung abgetrennt werden, um zu farbstabilen, temperaturbeständigen Polycarbonaten zu gelangen.

Für das Lösungsverfahren zur Herstellung von Polycarbonaten und Polyestercarbonaten, gilt bezüglich der Abtrennung des Katalysators dasselbe.

Demgegenüber liefert das erfindungsgemäße Verfahren Polycarbonate und Polyestercarbonate, die Farbstabilität und Temperaturbeständigkeit aufweisen.

Darüber hinaus hat das erfindungsgemäße Verfahren den Vorteil, daß die Katalysatorharze leicht aus dem Reaktionsgemisch abgetrennt und wiederverwendet werden können. Daraus resultiert eine vereinfachte Aufarbeitung der Reaktionslösung.

Aus dem US-Patent 3 211 775 ist die Herstellung von aromatischen Chlorformaten in Gegenwart polymerer Katalysatoren beschrieben.

Geeignete Harze sind solche, die den allgemeinen Formeln (I) - (VI) entsprechen.

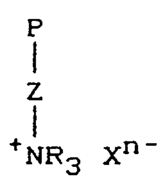
(I)

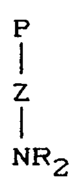
(II)

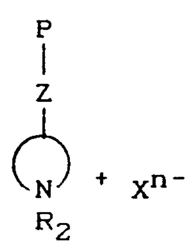
(III)

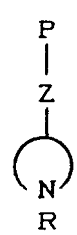
(IV)

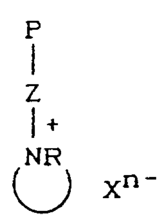
(V)

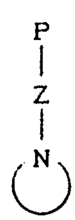
(VI)

wobei

- P eine in gängigen Lösungsmitteln unlösliche, vernetzte Polymerbasis ist,
- Z eine Verbindung zwischen dem N-Atom und der Polymerbasis P ist, wobei Z eine Einfachbindung oder $-(CH_2)n-$ mit n = 1-18 oder ein anderer beliebiger zweibindiger Rest sein kann,
- N ein Stickstoffatom ist, wobei das Stickstoffatom N im Falle der allgemeinen Formeln (III) bis (VI) Teil eines aliphatischen oder aromatischen Ringsystems gegebenenfalls wiederum substituiert sein kann,
- R einen-Substituenten des Stickstoffatoms N darstellt, wobei R unabhängig gleich oder verschieden ein Wasserstoffatom, ein Heteroatom, $C_1$-$C_{18}$-Alkyl und im Falle der allgemeinen Formeln (III) - (VI) Cycloalkyl, Bicycloalkyl und/oder überbrücktes Bicycloalkyl sein kann, wobei das Stickstoffatom N Teil der Ringstruktur sein kann außerdem $C_6$-$C_{60}$-Aryl und wobei die Substituenten wiederum substituiert sein können und wobei weiterhin die Reste R Heteroatome wie zum Beispiel -O-, -S- und/oder =N- eingebaut enthalten können.

Die Polymerbasis P ist entweder ein Polymerisat oder ein Polykondensat. Bevorzugt werden Polymerisate. Als Monomere zur Herstellung des Polymerisats dienen einfach ungesättigte Verbindungen, bevorzugt Verbindungen der allgemeinen Formel (VII)

$H_2C = CRD$ (VII)

worin

- R H oder Methyl oder einen beliebigen aliphatischen Rest mit 2 bis 18 C-Atomen und
- D einen gegebenenfalls substituierten Arylrest mit 6 bis 60 C-Atomen, eine Carboxylgruppe, eine Estergruppe und/oder eine Amidgruppe

bedeuten,
in Verbindung mit mehrfach ungesättigten Verbindungen, die zur Vernetzung geeignet sind. Bevorzugte mehrfach ungesättigte Verbindungen sind mit mehr als einer Vinylgruppe substituierte Aromaten, bevorzugt sind Ester und Amide ungesättigter Säuren mit mehrwertigen Alkoholen und Aminen, Diene und Divinylether mehrwertiger Alkohole, besonders bevorzugt ist Divinylbenzol.

Der Funktionalisierungsgrad, gemessen als aktive Gruppen pro Wiederholungseinheit der Polymerbasis P beträgt 0,3 bis 1,3 bevorzugt 0,5 bis 1.

Geeignete Harze sind Polymerisate und/oder Polykondensate mit Vernetzungsgraden von 0,5 bis 80 %, bevorzugt 3 bis 40 %, besonders bevorzugt 4 bis 10 %. Beispiele dafür sind vernetzte Polyester und/oder vernetzte Polyamide, vernetzte Polymerisate wie vernetztes Polymethylmethacrylat. Besonders bevorzugt ist mit Divinylbenzol vernetztes Polystyrol.

Bevorzugte Substituenten R am Stickstoffatom der Verbindungen (I) bis (VI) sind H, $CH_3$, $-C_2H_5$, $-C_2H_4OH$ und/oder $-CH_2C_6H_5$ und, mit der Maßgabe, daß 2 Reste R Teile eines Ringsystems mit dem Stickstoffatom N bilden z.B. Piperidin-, Piperazin oder Pyrrolidin-Strukturen, bicyclische Aza- oder überbrückte bicyclische Azaverbindungen.

Bevorzugte Anionen $X^{n-}$ sind $Cl^-$, $OH^-$ und $SO_4^{2-}$.

Der innere Aufbau der Harze kann gelförmig oder makroporös sein.

Eine bevorzugte Form des Katalysatorharzes ist die Kugelform. Die Durchmesser der einzelnen Kugeln betragen bevorzugt 0,2 bis 2 mm. Eine Verwendung des Katalysatorharzes in Pulverform (Durchmesser <0,2 mm) ist ebenfalls bevorzugt.

Ein Teil der erfindungsgemäß geeigneten Harze sind auch als Ionenaustauscherharze bekannt und beispielsweise als Lewatit® oder Wofatit® im Handel erhältlich.

Die erfindungsgemäß erhältlichen Polycarbonate und Polyestercarbonate haben mittlere Molekulargewichte $\overline{M}w$ (Gewichtsmittel) zwischen 10.000 und 200.000, bevorzugt zwischen 20.000 und 100.000 (ermittelt beispielsweise durch Messung der relativen Lösungsmittelviskosität in $CH_2Cl_2$ in bekannter Weise).

Geeignete Diphenole sind z.B.:
Hydrochinon,
Resorcin,
Dihydroxidiphenyle,
Bis-(hydroxiphenyl)-alkane,
Bis-(hydroxiphenyl)-cycloalkane,
Bis-(hydroxiphenyl)-sulfide,
Bis-(hydroxiphenyl)-ketone,
Bis-(hydroxiphenyl)-sulfoxide,

α,α'-Bis-(hydroxiphenyl)-diisopropylbenzole,
sowie deren kernalkylierte und/oder kernhalogenierte Verbindungen.

Bevorzugte Diphenole sind z.B.
2,2-Bis-(4-hydroxiphenyl)-propan,
2,4-Bis-(4-hydroxiphenyl)-2-methylbutan,
1,1-Bis-(4-hydroxiphenyl)-p-diisopropylbenzol,
2,2-Bis-(3-methyl-4-hydroxiphenyl)-propan,
2,2-Bis-(3-chlor-4-hydroxiphenyl)-propan,
Bis-(3,5-dimethyl-4-hydroxiphenyl)-methan,
2,2-Bis-(3,5-dimethyl-4-hydroxiphenyl)-propan,
Bis-(3,5-dimethyl-4-hydroxiphenyl)-sulfon,
2,4-Bis-(3,5-dimethyl-4-hydroxiphenyl)-2-methylbutan,
1,1-Bis-(3,5-dimethyl-4-hydroxiphenyl)-p-diisopropylbenzol,
2,2-Bis-(3,5-dibrom-4-hydroxiphenyl)-propan und
1,1-Bis-(4-hydroxiphenyl)-3,3,5-trimethylcyclohexan.

Besonders bevorzugte Diphenole sind z.B.
4,4'-Dihydroxidiphenyl,
4,4'-Dihydroxidiphenylsulfid,
2,2-Bis-(4-hydroxiphenyl)-propan,
2,2-Bis-(3,5-dimethyl-4-hydroxiphenyl)-propan,
2,2-Bis-(3,5-dichlor-4-hydroxiphenyl)-propan,
2,2-Bis-(3,5-dirom-4-hydroxiphenyl)-propan,
1,1-Bis-(4-hyroxiphenyl)-cyclohexan,
1,1-Bis-(4-hydroxiphenyl)-3,3,5-trimethylcyclohexan.

Geeignete Verzweiger sind z.B.
4,6-Dimethyl-2,4,6-tri-(4-hydroxiphenyl)-hepten-2,
4,6-Dimethyl-2,4,6-tri-(4-hydroxiphenyl)-heptan,
1,3,5-Tri-(4-hydroxiphenyl)-benzol,
1,1,1-Tri-(4-hydroxiphenyl)-ethan,
Tri-(4-hydroxiphenyl)-phenylmethan,
2,2-Bis-[4,4-bis-(4-hydroxyphenyl)-cyclohexyl]-propan,
2,4-Bis-(4-hydroxiphenyl-isopropyl)-phenol,
2,6-Bis-(2-hydroxi-5'-methylbenzyl)-4-methylphenol,
2-(4-hydroxyphenyl)-2-(2,4-hydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4''-dihydroxitriphenyl)-methyl)-benzol
und insbesondere
a,a',a''-Tris-(4-hydroxyphenyl)-1,3,5-triisopropenylbenzol.

Weitere mögliche Verzweiger sind 2,4-Dihydroxibenzoesäure, Trimesinsäure, Cyanurchlorid und 3,3-Bis-(3-methyl-3-hydroxiphenyl)-2-oxo-2,3-dihydroindol.

Geeignete Dicarbonsäuredichloride sind beispielsweise die der
Terephthalsäure,
Isoterephthalsäure,
tert.-Butylisophthalsäure,
3,3'-Diphenyldicarbonsäure,
4,4'-Diphenyldicarbonsäure,
3,3'-Benzophenondicarbonsäure,
4,4'-Benzophenondicarbonsäure,
3,4'-Benzophenondicarbonsäure,
4,4'-Diphenyletherdicarbonsäure,
4,4'-Diphenylsulfondicarbonsäure,
2,2'-Bis-(4-carboxyphenyl)-propan und der Trimethyl-3-phenylindan-4,5'-dicarbonsäure.

Anstelle oder zusammen mit den Dicarbonsäuredichloriden können auch Chloride von Phenolcarbonsäuren zur Herstellung der Polyestercarbonate mitverwendet werden, beispielsweise die Säurechloride der
p-Hydroxibenzoesäure,
m-Hydroxibenzoesäure,

o-Hydroxibenzoesäure, des
4-Hydroxi-4'-carboxydiphenyls,
4-Hydroxi-4'-carboxydiphenylethers und des
4-Hydroxi-4'-carboxydiphenylsulfons.

Geeignete Kettenabbrecher sind z.B. die erfindungsgemäßen Kettenabbrecher der DE-OS 3 919 553 (Le A 26 531) oder andere konventionelle Kettenabbrecher, also niedermolekulare Monophenole wie z.B. Phenol selbst oder Benzoesäurechlorid, insbesondere Monoalkylphenole oder Dialkylphenole mit bis zu 20 C-Atomen in den Alkylsubstituenten.

Für das erfindungsgemäße Verfahren geeignete Carbonatspender sind neben Phosgen z.B. Chlorameisensäureester von Bisphenolen und Triphosgen, aber auch alle anderen Carbonatspender.

Die erfindungegemäße Herstellung der Polycarbonate und Polyestercarbonate kann z.B. nach dem Zweiphasengrenzflächenverfahren erfolgen. Dazu werden Diphenole, insbesondere Dihydroxidiarylalkane bzw. -cycloalkane, wobei neben den unsubstituierten Dihydroxidiarylalkanen bzw. - cycloalkanen auch solche geeignet sind, die in o- und/oder m-Stellung zu den phenolischen Hydroxylgruppen substituiert sind, in wäßriger alkalischer Phase gelöst, gegebenenfalls können auch Kettenabbrecher und gegebenenfalls Verzweiger mitverwendet werden, und es wird ein für das Polycarbonat, Copolycarbonat, Polyestercarbonat und/oder Copolyestercarbonat geeignetes Lösungsmittel zugefügt. Dann wird bei einer Temperatur zwischen 0 und 100 °C und einem pH-Wert zwischen 8 und 14 Phosgen eingeleitet und gegebenenfalls Dicarbonsäuredichlorid zugesetzt. Nach dem Phosgenieren erfolgt die Polykondensation z.B. durch Überleiten der Emulsionen über das erfindungsgemäß zu verwendende Harz mit katalytisch aktiven Gruppen in einem Rohrreaktor oder durch Verrühren der Emulsion mit dem Harz mit katalytisch aktiven Gruppen in einem Rührkessel. Die gegebenenfalls mitzuverwendenden Kettenabbrecher und gegebenenfalls Verzweiger können vor, während oder nach der Phosgenierung zugegeben werden; die gegebenenfalls mitzuverwendenden Kettenabbrecher und gegebenenfalls Verzweiger können auch vor, während oder nach dem Kontakt der Emulsion mit dem Harz zugegeben werden. Die Phosgeneinleitungszeiten betragen 1 Sekunde bis 120 Minuten, der Kontakt mit dem Harz mit katalytisch aktiven Gruppen beträgt 1 Sekunde bis 120 Minuten. Zur Isolierung der fertigen Polycarbonate und Polyestercarbonate wird die organische Polymerlösung abgetrennt, neutralisiert und mit Wasser elektrolytfrei gewaschen. Anschließend können die Polycarbonate, Copolycarbonate, Polyestercarbonate und/oder Copolyestercarbonate, in bekannter Weise z.B. durch Abdampfen des Lösungsmittels, durch Ausfällen mit Nichtlösungsmitteln oder durch Kristallisation isoliert werden.

Analog kann zur erfindungsgemäßen Herstellung der Polycarbonate und Copolycarbonate auch das Lösungsverfahren angewendet werden. Dazu werden die Diphenole (wie oben beschrieben) in einem Lösungsmittel vorgelegt und bei Temperaturen zwischen 0 und 100 °C Phosgen eingeleitet und gegebenenfalls Dicarbonsäuredichlorid zugesetzt; gegebenenfalls können auch Kettenabbrecher und/oder Verzweiger mitverwendet werden. Anschließend erfolgt die Polykondensation z.B. durch Überleiten der Lösung über das Harz mit katalytisch aktiven Gruppen in einem Rohrreaktor oder durch Verrühren der Lösung mit dem Harz mit katalytisch aktiven Gruppen in einem Rührkessel. Die gegebenenfalls mitzuverwenden Kettenabbrecher und gegebenenfalls Verzweiger können vor, während oder nach der Phosgenierung zugegeben werden; die gegebenenfalls mitzuverwendenden Kettenabbrecher und gegebenenfalls Verzweiger können vor, während oder nach dem Kontakt der Lösung mit dem Harz zugegeben werden. Die Phosgeneinleitungszeiten betragen 1 Sekunde bis 120 Minuten, der Kontakt mit dem Harz mit katalytisch aktiven Gruppen beträgt 1 Sekunde bis 120 Minuten. Anschließend können die Polycarbonate und Polyestercarbonate in bekannter Weise z.B. durch Abdampfen des Lösungsmittels, durch Ausfällen mit Nichtlösungsmittel oder durch Kristallisation isoliert werden.

Die Menge an einzusetzendem Phosgen und gegebenenfalls Dicarbonsäuredichlorid im Verhältnis zu einzusetzendem Diphenol und gegebenenfalls mehrfunktionellen Phenolen und gegebenenfalls monofunktionellen Phenolen beträgt in beiden Herstellungsvarianten 100 bis 300 Mol-%, bevorzugt 105 bis 200 Mol-%, besonders bevorzugt 110 bis 160 Mol-%.

Die Menge an Kettenabbrecher beträgt 0 bis 10 Mol-%, bevorzugt 0,5 bis 8 Mol-%, besonders bevorzugt 1 bis 2,5 Mol-%, bezogen auf die Menge eingesetzter Diphenole.

Die Menge an Verzweiger beträgt 0 bis 5 Mol-%, bevorzugt 0,1 bis 4 Mol-%, besonders bevorzugt 0,2 bis 3 Mol-%, bezogen auf die Menge eingesetzter Diphenole.

Bei Mitverwendung von Chloriden von Phenolcarbonsäuren ergibt sich die Dosierung der Chlorid-Funktionen und der Phenol-Funktionen für den Fachmann aus der vorliegenden Offenbarung in Verbindung mit seinem Fachwissen.

Die nach dem erfindungsgemäßen Verfahren erhältlichen Polycabonate und Polyestercarbonate können in üblicher Weise auf den bekannten Maschinen zu beliebigen Formkörpern verarbeitet werden. Vor oder

während dieser Verarbeitung können die üblichen Additive wie Stabilisatoren, Flammschutzmittel, Pigmente, Füllstoffe oder Glasfasern in bekannter Menge zugesetzt werden.

Die nach dem erfindungsgemäßen Verfahren erhältlichen Polycarbonate und Polyestercarbonate sind in bekannter Weise einsetzbar und technisch brauchbar auf den Gebieten der Elektrotechnik, Optik, beispielsweise als Folien und Platten.

Beispiel 1

Herstellung eines Polycarbonates

In einem 2-l-Wellenbrecherkolben mit Rührer wurden eingewogen:
45,7 g Bisphenol-A
35,2 g Natronhydroxidplätzchen
506 ml Wasser
0,959 g Phenol
359 ml Methylenchlorid
Es wurden 31,7 g Phosgen eingeleitet. Nach Zugabe von 100 g eines Ionenaustauscherharz mit Trimethylammonium als aktive Gruppe wurde weitere 45 Minuten gerührt. Das Ionenaustauscherharz wurde abfiltriert, die Phasen getrennt und 2 mal mit Wasser gewaschen.

Vergleichsbeispiel

Herstellung eines Polycarbonates

In einen 2-l-Wellenbrecherkolben mit Rührer wurden eingewogen:
45,7 g Bisphenol-A
35,2 g Natronhydroxid
506 ml Wasser
0,959 g Phenol
359 ml Methylenchlorid
Es wurden 31,7 g Phosgen eingeleitet. Nach Zugabe von 0,2 ml Ethylpiperiden wurde weitere 45 Minuten gerührt. Der Ansatz wurde sauergestellt, die Phase getrennt und 2 mal mit Wasser gewaschen.

Beispiel 2-3

Herstellung von Polycarbonaten

Das Beispiel 1 wurde 2 mal unter Einsatz derselben 100 g Ionenaustauscherharz aus dem jeweils vorhergehenden Ansatz wiederholt.

| | $\eta_{rel}$ |
|---|---|
| Bsp. 1 | 1.196 |
| Vergleich | 1.208 |
| Bsp. 2 | 1.171 |
| Bsp. 3 | 1.185 |

Beispiel 4

Herstellung eines Polyestercarbonates

In einen 1-l-Wellenbrecherkolben mit Rührer wurden eingewogen:
22,9 g Bisphenol-A
17,6 g Natronhydroxidplätzchen
250 ml Wasser

0,48 g Phenol
175 ml Methylenchlorid
Es wurden 14,9 g Phosgen eingeleitet und gleichzeitig 2,0 g Terephthalsäuredichlorid zugegeben. Nach Zugabe von 50 g eines Ionenaustauscherharzes mit 1 Azonium-1-ethylcyclohexan

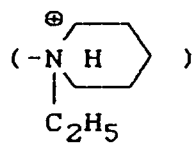

als aktiver Gruppe wurde weitere 45 Minuten gerührt. Das Ionenaustauscherharz wurde abfiltriert, die Phasen getrennt und zweimal mit Wasser gewaschen. Es wurde ein Polyestercarboant mit einer relativen Lösungsviskosität von 1,350 erhalten.

Beispiel 5

Herstellung eines Copolycarbonates

In einem 1-l-Wellenbrecherkolben mit Rührer wurden eingewogen:
22,9 g Bisphenol-A
17,6 g Natronhydroxidplätzchen
1,55 g 1,1-Bis-(4-hydroxiphenyl)-3,3,5-trimethyl-cyclohexan
250 ml Wasser
0,433 g Phenol
175 ml Methylenchlorid
Es wurden 15,8 g Phosgen eingeleitet. Nach Zugabe von 50 g eines Ionenaustauscherharzes mit 1-Azonium-1-ethyl-cyclohexan

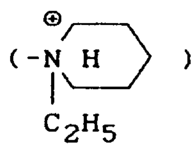

als aktiver Gruppe wurde weitere 45 Minuten gerührt. Das Ionenaustauscherharz wurde abfiltriert, die Phasen getrennt und zweimal mit Wasser gewaschen. Es wurde ein Copolycarbonat mit einer relativen Lösungsviskosität von 1,381 erhalten.

**Patentansprüche**

1. Verfahren zur Herstellung von thermoplastischen Polycarbonaten, von thermoplastischen Polyestercarbonaten, Copolycarbonaten und/oder Copolyestercarbonaten aus Diphenolen, Carbonatspendern, gegebenenfalls Dicarbonsäurdichloriden und/oder Kettenabbrechern nach den Methoden des Phasengrenzflächenverfahrens oder des Verfahrens in homogener Lösung unter Verwendung von Katalysatoren, dadurch gekennzeichnet, daß man als Katalysatoren Harze mit katalytisch aktiven Gruppen verwendet.

2. Verfahren zur Herstellung von thermoplastischen Polycarbonaten und/oder Copolycarbonaten aus Diphenolen, Carbonatspendern und Kettenabbrechern gemäß Anspruch 1, dadurch gekennzeichnet, daß zusätzlich Verzweiger mitverwendet werden.

3. Verfahren zur Herstellung von thermoplastischen Polyestercarbonaten und/oder Copolyestercarbonaten aus Diphenolen, Carbonatspendern, Dicarbonsäuredichloriden und Kettenabbrechern gemäß Anspruch 1, dadurch gekennzeichnet, daß zusätzlich Verzweiger mitverwendet werden.

4. Verfahren zur Herstellung von thermoplastischen Polyestercarbonaten und/oder Copolyestercarbonaten aus Diphenolen, Carbonatspendern, Dicarbonsäuredichloriden und gegebenenfalls Kettenabbrechern

gemäß Anspruch 1, dadurch gekennzeichnet, daß zusätzlich zu den Dicarbonsäuredichloriden oder anstelle der Dicarbonsäuredichloride Hydroxicarbonsäurechloride eingesetzt werden.

Europäisches Patentamt

# EUROPÄISCHER RECHERCHENBERICHT

Nummer der Anmeldung
EP 93 11 5259

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
| Y | US-A-3 254 051 (J.A. SCHMITT)<br>* Ansprüche 1-20 *<br>* Spalte 1, Zeile 16 - Zeile 50 *<br>* Spalte 3, Zeile 32 - Spalte 4, Zeile 70 *<br>--- | 1,4 | C08G64/24<br>C08G64/28<br>C08G63/82<br>C08G63/64 |
| Y | DE-A-22 11 957 (BAYER AG)<br>* Anspruch 2 *<br>* Seite 2, Absatz 4 - Seite 3, Absatz 4 *<br>* Seite 6, Absatz 2 - Seite 7, Absatz 1 *<br>--- | 1 | |
| Y | EP-A-0 196 429 (GENERAL ELECTRIC COMP.)<br>* Anspruch 7 *<br>* Seite 5, Zeile 14 - Seite 6, Zeile 21 *<br>--- | 2-4 | |
| Y | DE-A-33 46 946 (BAYER AG)<br>* Anspruch *<br>* Seite 6, Zeile 20 - Seite 8, Zeile 13 *<br>* Seite 9, Zeile 9 - Seite 10, Zeile 3 *<br>--- | 3 | |
| Y | EP-A-0 013 904 (BAYER AG)<br>* Ansprüche 1-3 *<br>* Seite 4, Zeile 4 - Zeile 11 *<br>* Seite 9, Zeile 5 - Seite 11, Zeile 19 *<br>* Seite 13, Zeile 10 - Zeile 19 *<br>--- | 2 | RECHERCHIERTE SACHGEBIETE (Int.Cl.5)<br>C08G |
| A | DE-A-40 30 708 (BAYER AG)<br>* Anspruch *<br>--- | 1 | |
| D,A | US-A-3 211 775 (C. W. STEPHENS ET AL.)<br>* Ansprüche 1-7 *<br>* Spalte 2, Zeile 31 - Spalte 3, Zeile 71 *<br>--- | 1 | |
| A | US-A-3 143 525 (J. B. OTT)<br>* Anspruch 1 *<br>* Spalte 5, Zeile 15 - Zeile 70 *<br>---<br>-/-- | 1 | |

Der vorliegende Recherchenbericht wurde für alle Patentansprüche erstellt

| Recherchenort | Abschlußdatum der Recherche | Prüfer |
|---|---|---|
| BERLIN | 31. Januar 1994 | Krische, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 93 11 5259

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | US-A-4 612 386 (J. M. RENGA)<br>* Ansprüche 1-15 *<br>* Spalte 1, Zeile 58 - Spalte 4, Zeile 43 *<br>----- | 1 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| BERLIN | 31. Januar 1994 | Krische, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)